# EUROPÄISCHE PATENTSCHRIFT

(11) **EP 4 594 714 B1**
(45) Veröffentlichungstag und Bekanntmachung des Hinweises auf die Patenterteilung: **02.09.2026**
(21) Anmeldenummer: 23748766.5
(22) Anmeldetag: 27.07.2023
(51) Int. Cl.: G01H 1/00, G01H 3/10, D21B 1/34, D21D 5/04

(54) **VORRICHTUNG UND VERFAHREN ZUR ERFASSUNG DES VERSCHLEISSES EINER KOMPONENTE**
DEVICE AND METHOD FOR DETECTING WEAR IN A COMPONENT
DISPOSITIF ET PROCÉDÉ DE DÉTECTION D'USURE DANS UN COMPOSANT

(30) Priorität: 28.09.2022 AT 507432022
(43) Veröffentlichungstag der Anmeldung: 06.08.2025
(73) Patentinhaber: Andritz AG, 8045 Graz (AT)
(72) Erfinder: MAGOR, Wolfgang, 8062 Kumberg (AT); SPIELMANN, Christoph, 8151 Hitzendorf (AT); FERK, Thomas, 8020 Graz (AT); PREUER, Michael, 8010 Graz (AT)
(74) Vertreter: Anzel, Andreas
(86) Internationale Anmeldenummer: PCT/EP2023/070820
(87) Internationale Veröffentlichungsnummer: WO 2024/068097

(56) Entgegenhaltungen:
- CN-A- 111 337 115
- DE-U1- 202007 008 794

## Beschreibung

Die Erfindung betrifft eine Vorrichtung zur Aufbereitung einer Faserstoffsuspension umfassend eine erste Komponente mit zumindest einer auf der ersten Komponente, insbesondere als Verschleißleiste, ausgebildeten Verschleißkomponente, und eine zweite Komponente, wobei zwischen der ersten Komponente und der zweiten Komponente ein Spalt ausgebildet ist, die zumindest eine Verschleißkomponente in dem ausgebildeten Spalt angeordnet ist und die erste Komponente und die zweite Komponente relativ zueinander bewegbar, insbesondere rotierbar, sind.

In Verfahren und Vorrichtungen zur Aufbereitung von Faserstoffsuspensionen sind häufig relativ zueinander bewegte, insbesondere rotierende, Komponenten im Einsatz. Beispiele für solche Vorrichtungen sind Pulper bzw. Stoffauflöser, Mahlaggregate bzw. Refiner und Siebvorrichtungen wie zum Beispiel Drucksortierer. Diesen Vorrichtungen ist gemein, dass die Faserstoffsuspension in einem durch eine erste Komponente und eine zweite Komponente gebildeten Spalt aufbereitet wird, wobei zur Aufbereitung der Faserstoffsuspension die erste und zweite Komponente unter Ausbildung einer Spaltströmung relativ zueinander bewegt sind. Dies zieht einen Verschleiß der den Spalt bildenden Komponenten nach sich, womit aus Gründen der Verfahrens- und Energieeffizienz die verschleißenden Komponenten rechtzeitig zu tauschen sind. Während des laufenden Betriebs ist eine Messung des Verschleißes an den Komponenten schwierig, da die Messung in einem System mit bewegten Komponenten erfolgt und die im Spalt messenden Sensoren ebenfalls schnell einem Verschleiß unterworfen sind. Insbesondere sind herkömmliche optische oder induktive Sensoren nur schlecht zur Messung im mit Faserstoffsuspension erfülltem Spalt geeignet.

So offenbart die DE 20 2007 008 794 U1 eine Vorrichtung zur Stoffaufbereitung umfassend wenigstens eine Einrichtung zur wenigstens mittelbaren Erfassung des Verschleißes an der Siebeinrichtung, welche als optischer, akustischer oder mechanischer Verschleißsensoren ausgeführt sein kann. Vorzugsweise sind die Sensoren als Verschleißsensoren und aus dem gleichen Material wie die verschleißenden Komponenten ausgebildet, wobei die Oberfläche des Sensors bündig mit der verschleißenden Komponente anzuordnen ist. Dabei sind der Sensor wie die verschleißende Komponente einem kontinuierlichen Verschleiß ausgesetzt und es wird beispielsweise die geometrische Veränderung des Sensors, z.B. in Form der Abnahme der Länge des Sensors, zur Erfassung des Verschleißes herangezogen. Ebenso ist ein Verschleißmesssystem offenbart, wobei die Abnahme der Länge eines Indikators, der als Sensor fungiert, als mittelbarer Wert für den Verschleiß an den zu messenden Teilen herangezogen wird.

Weiter offenbart die JP2012185145A eine Anordnung, wobei ein Wirbelstromsensor gegenüber der Oberfläche eines sich bewegenden Stabes in einem berührungslosen Zustand positioniert ist, und wobei die Impedanz oder eine physikalische Größe, die der Impedanz entspricht, zur Beurteilung der Änderung des Abstands zwischen dem Stab und dem Wirbelstromsensor gemessen wird.

Weiter offenbart die CN111337115A eine Vorrichtung und ein Verfahren zur Messung der Shimmy Schwingung von Turbinenrotoren in Dampfturbinen.

Ziel der Erfindung ist eine Vorrichtung zur Aufbereitung einer Faserstoffsuspension mit einer unmittelbaren, berührungslosen und exakten Erfassung des Verschleißes einer ersten Komponente. Ein weiteres Ziel der Erfindung ist, dass der Sensor nur vernachlässigbarem Verschleiß ausgesetzt ist. Ebenso ist ein Ziel der Erfindung eine inline Messung in Systemen mit in einer Suspension bewegten Komponenten. Schließlich ist ein Ziel der Erfindung eine Messung in trüben - bzw. nicht transparenten - Suspensionen.

Dies gelingt erfindungsgemäß durch eine Vorrichtung zur Aufbereitung einer Faserstoffsuspension, insbesondere ein Pulper, Refiner, Detrasher oder Sortierer, umfassend einen Sensor, eine erste Komponente und eine zweite Komponente, wobei der Sensor in der zweiten Komponente angeordnet ist, zwischen der ersten Komponente und der zweiten Komponente ein Spalt ausgebildet ist und die erste Komponente und die zweite Komponente relativ zueinander bewegbar, insbesondere rotierbar, sind, wobei ein Fühler des Sensors über einen Motor des Sensors entlang eines Messweges in Richtung der ersten Komponente in den Spalt bewegbar ist und über einen Vibrationssensor des Sensors die Vibrationen des Fühlers entlang des Messweges erfassbar sind. Dabei ist der Fühler von einer ersten Position, wobei der Fühler beispielsweise vollständig innerhalb eines Gehäuses positioniert ist, hin zu einer zweiten Position bewegbar, wobei der Fühler in der zweiten Position zumindest zum Teil außerhalb des Gehäuses und in unmittelbarer Nähe zur ersten Komponente angeordnet ist und die erste Komponente bevorzugt gerade nicht berührt. Erfindungsgemäß nehmen die aufgezeichneten Vibrationen des Fühlers mit Annäherung des Fühlers an die relativ zum Fühler bewegte erste Komponente zu und sind am größten in unmittelbarer Nähe zur ersten Komponente, wobei Fühler und erste Komponente gerade nicht in Kontakt sind. Erfindungsgemäß erlaubt die Anordnung so die berührungslose Bestimmung des Abstands zwischen dem Sensor und der ersten Komponente. Analog erlaubt die Anordnung auch vorteilhafterweise die Bestimmung des Verschleißes der ersten Komponente.

Erfindungsgemäß ist auf der ersten Komponente zumindest eine Verschleißkomponente, insbesondere eine Verschleißleiste, ausgebildet und die zumindest eine Verschleißkomponente ist in dem zwischen der ersten Komponente und der zweiten Komponente ausgebildeten Spalt angeordnet, wobei der Fühler entlang des Messweges in Richtung der Verschleißkomponente in den Spalt bewegbar ist und über den Vibrationssensor die Vibrationen des Fühlers entlang des Messweges im Spalt erfassbar sind. Vorteilhafterweise erlaubt dies die Bestimmung des Abstands zwischen Sensor und erster Komponente bzw. der Verschleißkomponente und insbesondere auch die Bestimmung des Verschleißes der ersten Komponente bzw. der Verschleißkomponente. In den Vorrichtungen zur Aufbereitung einer Faserstoffsuspension ist eine raue Messumgebung gegeben, wobei die erfindungsgemäße Messanordnung eine exakte und robuste Lösung darstellt und nicht anfällig für Verschleiß ist.

Erfindungsgemäß umfasst der Sensor den Vibrationssensor und der Vibrationssensor ist zur Erfassung der Vibrationen des Fühlers entlang des Messweges ausgebildet. Dabei ist der Fühler entlang des Messweges über den Motor bewegbar, wobei der Fühler über das Gehäuse direkt oder indirekt geführt ist. Es bezeichnet der Messweg den Weg des Fühlers von einer ersten Position, wobei der Fühler beispielsweise vollständig innerhalb des Gehäuses positioniert ist, hin zu einer zweiten Position, wobei der Fühler zumindest zum Teil außerhalb des Gehäuses und in unmittelbarer Nähe zur einer ersten Komponente angeordnet ist und die erste Komponente bevorzugt gerade nicht berührt. Erfindungsgemäß sind die entlang des Messweges aufgezeichneten Vibrationen des Fühlers vom Abstand zur ersten Komponente abhängig, und liegen bei zunehmendem Abstand zwischen Fühler und erster Komponente typischerweise auf einem ersten, niedrigen Niveau. Mit Verringerung des Abstands ist insbesondere im unmittelbaren Nahbereich der ersten Komponente ein sehr starker Anstieg der Vibrationen im Fühler gegeben, auch ohne dass ein physischer Kontakt gegeben wäre. Dabei werden die Vibrationen im Fühler beispielsweise durch eine relative Bewegung, insbesondere Rotierung, der ersten Komponente und des Sensors induziert infolge der sich zwischen dem Sensor und der ersten Komponente ausbildenden Strömung. Erfindungsgemäß erfasst der Sensor berührungslos den Abstand zu einer ersten Komponente dadurch, dass der Abstand einer ersten Position des Fühlers zu einer zweiten Position des Fühlers gemessen wird, wobei der Fühler in der zweiten Position Vibrationen auf einem zweiten, hohen Niveau aufweist. Das zweite, hohe Niveau ist als Schwellenwert zu verstehen und kann individuell optimiert werden, um insbesondere einen möglichst geringen Abstand zur ersten Komponente zu erzielen unter Vermeidung eines Kontakts zwischen Fühler und erster Komponente. Beispielsweise ist der Quotient aus zweitem Schwingungsniveau zu erstem Schwingungsniveau größer 10, vorzugsweise größer 20 und besonders bevorzugt größer 50, wobei das Schwingungsniveau beispielsweise über die Schwingungsamplitude des Fühlers erfassbar ist. Erfindungsgemäß ist der Sensor somit zur Erfassung des Abstands zwischen Sensor und der ersten Komponente geeignet. Durch wiederholtes Messen des Abstands, wobei ein Verschleiß der ersten Komponente eine Abstandsänderung und typischerweise eine Abstandsvergrößerung induziert, ist der Sensor zur Erfassung des Verschleißes der ersten Komponente geeignet. Erfindungsgemäß ist der Sensor auch zur Erfassung des Abstands zu einer ersten Komponente geeignet, die nicht verschleißt, womit der Senor eine entsprechende Abstandsmessung ermöglicht.

Vorteilhafterweise ist der Messweg als Gerade ausgebildet. Dies ist einfach umsetzbar, beispielsweise indem der Fühler über das Gehäuse linear geführt ist.

Eine günstige Ausgestaltung der Erfindung ist dadurch gekennzeichnet, dass der Motor als Schrittmotor ausgebildet ist. Da die Schrittweite des Schrittmotors bekannt ist, kann die Position des Fühlers direkt und genau aus der Anzahl der Schritte des Schrittmotors bestimmt werden. Vorteilhafterweise ist der Schrittmotor zur Realisierung einer Schrittweite kleiner gleich 5/100 mm ausgestaltet.

Eine weitere günstige Ausgestaltung der Erfindung ist dadurch gekennzeichnet, dass der Fühler und der Vibrationssensor über ein Verbindungselement, insbesondere eine Stange, verbunden sind und der Motor an das Verbindungselement in einem Bereich zwischen Fühler und Vibrationssensor gekoppelt ist. Durch den modularen Aufbau können Fühler, Motor bzw. Vibrationssensor im Verschleißfall einzeln getauscht bzw. erneuert werden. Insbesondere kann so ein potentiell empfindlicher Vibrationssensor vor Verschmutzung und vor Feuchtigkeit geschützt werden. Der Fühler ist dabei direkt der Messumgebung, z.B. einer Faserstoffsuspension, ausgesetzt, wobei der Fühler direkt oder indirekt über das Gehäuse geführt ist. Gesonderte Dichtungen zwischen Fühler und Gehäuse erlauben insbesondere eine Trennung zwischen der Messumgebung und dem Inneren des Gehäuses, bzw. dem Vibrationssensor. Vorteilhafterweise ist der Motor über eine Spindel an das Verbindungselement, insbesondere eine Stange, gekoppelt. Die Stange erlaubt bei linearer Führung des Fühlers durch das Gehäuse eine einfache Ausbildung eines als Gerade ausgebildeten Messweges. Über die Spindel kann insbesondere eine exakte und reproduzierbare Bewegung des Fühlers entlang des Messweges realisiert werden.

Eine vorteilhafte Ausführung der Erfindung ist dadurch gekennzeichnet, dass der Fühler aus einer Aluminium-Bronze Legierung ausgebildet ist. Erfindungsgemäß ist der Fühler über das Gehäuse direkt oder indirekt geführt, wobei bei direkter Führung ein direkter Kontakt zwischen Fühler und Gehäuse und bei indirekter Führung ein indirekter Kontakt über ein Zwischenelement gegeben ist. Die Ausgestaltung des Fühlers aus einer Aluminium-Bronze Legierung erlaubt zum einen vorteilhafte Gleiteigenschaften gegenüber dem Gehäuse bzw. dem Zwischenelement und zum anderen ist der Fühler ausreichend steif und somit schwingungsfähig. Typischerweise ist das Gehäuse oder Zwischenelement aus rostfreiem Edelstahl ausgebildet.

Eine weitere günstige Ausgestaltung der Erfindung ist dadurch gekennzeichnet, dass der Fühler vollständig innerhalb des Gehäuses positionierbar ist. Dies ist vorteilhaft, da zwischen zwei Messungen der Fühler innerhalb des Gehäuses geschützt positioniert ist und keinem Verschleiß ausgesetzt ist. Dabei ist der Fühler während der Messung zumindest zum Teil außerhalb des Gehäuses entlang des Messweges bewegbar, wobei der Fühler entlang des Messweges zur ersten Komponente führbar ist. Während der Messung ist der Fühler der Messumgebung, beispielsweise der Faserstoffsuspension, ausgesetzt. Entsprechend dem kurzzeitigen Kontakt ist der mögliche Verschleiß des Fühlers vorteilhafterweise vernachlässigbar.

In einer vorteilhaften Ausführung der Vorrichtung ist die erste Komponente als um eine Achse drehbarer Rotor und die zweite Komponente als Siebeinrichtung oder Stator ausgebildet. Beispielsweise bei Ausbildung der Vorrichtung zur Aufbereitung der Faserstoffsuspension als Pulper ist die erste Komponente als Rotor ausgebildet, wobei der Sensor in der als Siebeinrichtung ausgebildeten zweiten Komponente oder in einer zweiten Komponente benachbart zur Siebeinrichtung angeordnet ist. In einer beispielsweisen Ausgestaltung der Vorrichtung zur Aufbereitung der Faserstoffsuspension als Refiner ist die erste Komponente als Rotor ausgebildet, wobei der Sensor in der als Stator ausgebildeten zweiten Komponente angeordnet ist. In einer weiteren beispielsweisen Ausgestaltung der Vorrichtung zur Aufbereitung der Faserstoffsuspension als Sortierer, ist die erste Komponente als Rotor ausgebildet, wobei der Sensor in der als Stator ausgebildeten zweiten Komponente angeordnet ist. Vorteilhafterweise erfolgt die Anordnung des Sensors in der zweiten Komponente, wobei die zweite Komponente nicht relativ zur Vorrichtung bewegbar ist, wobei die erste Komponente relativ zur zweiten Komponente bewegbar ist. Dies erlaubt eine besonders einfache Installation des Sensors.

In einer ebenso vorteilhaften Ausführung der Vorrichtung ist die erste Komponente als Siebeinrichtung oder Stator und die zweite Komponente als um eine Achse drehbarer Rotor ausgebildet. Beispielsweise bei Ausbildung der Vorrichtung zur Aufbereitung der Faserstoffsuspension als Pulper ist die erste Komponente als Siebeinrichtung ausgebildet, wobei der Sensor in der als Rotor ausgebildeten zweiten Komponente angeordnet ist. In einer beispielsweisen Ausgestaltung der Vorrichtung zur Aufbereitung der Faserstoffsuspension als Refiner ist die erste Komponente als Stator ausgebildet, wobei der Sensor in der als Rotor ausgebildeten zweiten Komponente angeordnet ist. In einer weiteren beispielsweisen Ausgestaltung der Vorrichtung zur Aufbereitung der Faserstoffsuspension als Sortierer, ist die erste Komponente als Stator ausgebildet, wobei der Sensor in der als Rotor ausgebildeten zweiten Komponente angeordnet ist.

Gegenstand der Erfindung ist auch ein Verfahren zur Erfassung des Verschleißes einer ersten Komponente, wobei in einer erfindungsgemäßen Vorrichtung zur Aufbereitung einer Faserstoffsuspension die erste Komponente und die zweite Komponente einen Spalt ausbilden, der Spalt mit einer Flüssigkeit oder Suspension gefüllt ist, wobei die erste Komponente und die zweite Komponente zur Ausbildung einer Strömung im Spalt relativ zueinander bewegt, insbesondere rotiert, werden, dadurch gekennzeichnet, dass der Fühler über den Motor in Richtung der ersten Komponente in den Spalt bewegt wird, wobei über den Vibrationssensor die Vibrationen des Fühlers entlang des Messweges im Spalt erfasst werden. Dabei erlaubt der erfindungsgemäße Sensor die Erfassung des Abstands zwischen dem Sensor und der ersten Komponente, wobei durch wiederholtes Messen des Abstands eine Längenänderung und somit der Verschleiß der ersten Komponente erfasst wird.

Gegenstand der Erfindung ist weiter die Verwendung des erfindungsgemäßen Sensors zur Messung des Abstands zwischen einer ersten Komponente und einer zweiten Komponente, wobei der Sensor in der zweiten Komponente angeordnet ist und die erste und zweite Komponente relativ zueinander bewegt, insbesondere rotiert, werden, wobei der Fühler über den Motor in Richtung der ersten Komponente bewegt wird und über den Vibrationssensor die Vibrationen des Fühlers entlang des Messweges erfasst werden.

Die Erfindung wird nun anhand der Zeichnungen beispielhaft beschrieben.
Fig. 1 zeigt einen erfindungsgemäßen Sensor.
Fig. 2 zeigt ein Beispiel für erfasste Vibrationen des erfindungsgemäßen Sensors entlang des Messweges.
Fig. 3 zeigt eine als Pulper ausgestaltete Vorrichtung zur Aufbereitung einer Faserstoffsuspension mit der erfindungsgemäßen Messanordnung.
Fig. 4 zeigt ein Detail der als Pulper ausgestalteten Vorrichtung zur Aufbereitung einer Faserstoffsuspension mit der erfindungsgemäßen Messanordnung.

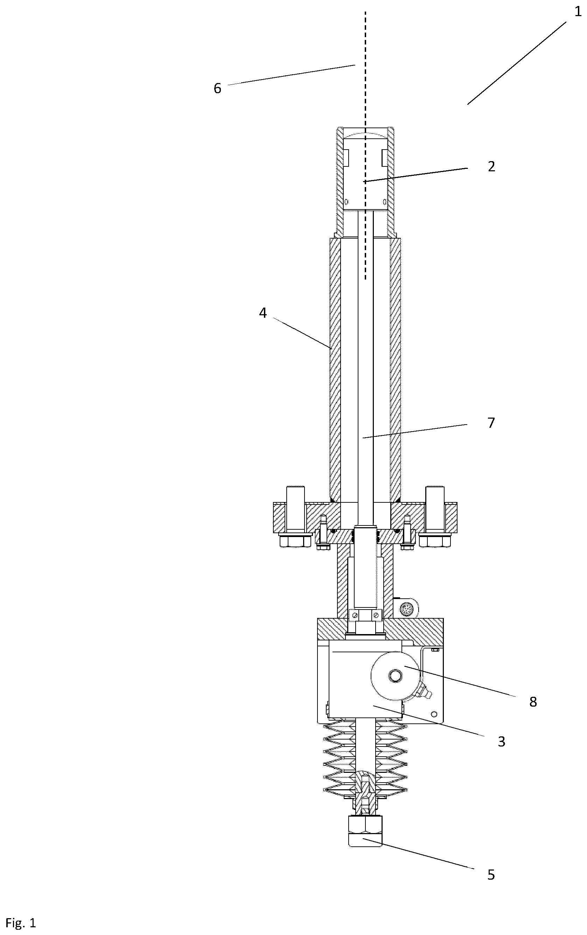

Fig. 1 zeigt einen erfindungsgemäßen Sensor 1, umfassend einen Fühler 2, einen Motor 3, wobei der Fühler 2 direkt über das Gehäuse 4 geführt ist und der Fühler 2 über den Motor 3 entlang des Messweges 6 bewegbar ist. In Fig. 1 ist der Messweg 6 als Gerade ausgebildet. In Fig.1 ist am Fühler 2 eine Nut erkennbar, welche die Aufnahme einer Dichtung erlaubt. Generell ist eine Abdichtung zwischen Gehäuse 4 und Fühler 2 vorteilhaft und erlaubt insbesondere den Innenraum des Gehäuses 4 gegen die Umgebung des Sensors 1 abzudichten. Weiter umfasst der Sensor 1 einen Vibrationssensor 5, wobei der Vibrationssensor 5 zur Erfassung der Vibrationen des Fühlers 2 entlang des Messweges 6 ausgebildet ist. Der Fühler 2 und der Vibrationssensor 5 sind über ein als Stange ausgebildetes Verbindungselement 7 verbunden, wobei der Motor an das Verbindungselement 7 in dem Bereich zwischen Fühler 2 und Vibrationssensor 7 gekoppelt ist. Vorteilhafterweise erfolgt die Koppelung des Motors 3 an das Verbindungselement 7 über eine Spindel 8. Typischerweise ist das Gehäuse aus rostfreiem Stahl ausgebildet. Vorteilhaft ist auch die Ausgestaltung des Fühlers 2 aus einer Aluminium-Bronze Legierung. Der Sensor 1 ist vollständig innerhalb des Gehäuses 4 positionierbar, was in Fig. 1 dargestellt ist. Zur Messung ist der Fühler 2 zumindest zum Teil außerhalb des Gehäuses 4 entlang des Messweges 6 bewegbar.

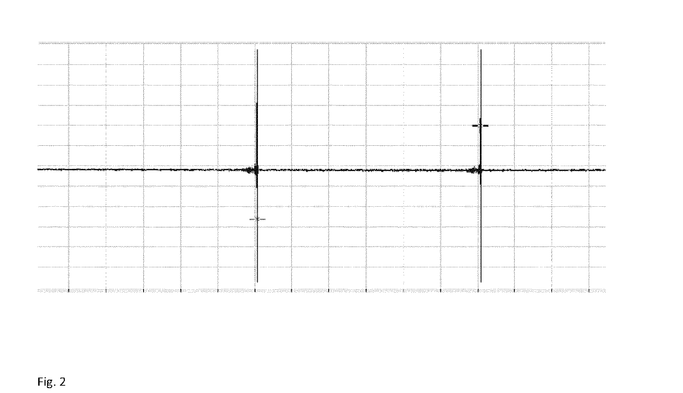

Fig. 2 zeigt ein Beispiel für erfasste Vibrationen des erfindungsgemäßen Sensors entlang des Messweges. Dabei sind auf der Ordinate die erfassten Vibrationen des Fühlers 2 dargestellt, beispielsweise in Form der Schwingungsamplitude des Fühlers 2. Auf der Abszisse ist die Zeitachse dargestellt. Dabei wurde der Fühler 2 wiederholt entlang des Messweges 6 bewegt zwischen einer ersten Position, wobei der Fühler beispielsweise vollständig innerhalb des Gehäuses positioniert ist, hin zu einer zweiten Position, wobei der Fühler zumindest zum Teil außerhalb des Gehäuses und in unmittelbarer Nähe zur einer ersten Komponente 9 angeordnet ist und die erste Komponente bevorzugt gerade nicht berührt. In Fig.2 ist gut erkennbar, dass die aufgezeichneten Vibrationen typischerweise auf einem ersten, niedrigen Niveau liegen, was bei einem entsprechenden Abstand zwischen Fühler und erster Komponente gegeben ist. Mit Verringerung des Abstands zwischen Fühler 2 und erster Komponente 9 ist insbesondere im unmittelbaren Nahbereich zur ersten Komponente ein sehr starker Anstieg der Vibrationen im Fühler gegeben, auch ohne dass ein physischer Kontakt gegeben wäre. Somit kann durch Erfassung der Vibrationen unmittelbar auf den Abstand der ersten Komponente 9 vom Sensor 1 rückgeschlossen werden. In Fig. 2 wurde nach erstmaliger Erfassung des Abstands der ersten Komponente, i.e. Erfassung des ersten peaks der Vibrationen, der Fühler 2 in die erste Position zurückbewegt und danach nochmals entlang des Messweges 6 in Richtung der ersten Komponente 9 bewegt. Wieder zeigt sich im unmittelbaren Nahbereich zur ersten Komponente ein sehr starker Anstieg der Vibrationen im Fühler, i.e. in Form des zweiten Peaks in Fig. 2, womit wiederholt auf den Abstand der ersten Komponente 9 vom Sensor 1 rückgeschlossen werden kann. Somit erlaubt der Sensor die berührungslose Erfassung des Abstands zwischen dem Sensor und einer ersten Komponente durch Messung des Abstands zwischen einer ersten Position des Fühlers und einer zweiten Position des Fühlers, wobei der Fühler in der zweiten Position Vibrationen auf einem zweiten, hohen Niveau aufweist. Hinsichtlich der Definition des zweiten hohen Niveaus als Schwellenwert wird auf die oben gemachten Aussagen zum erfindungsgemäßen Sensor verwiesen.

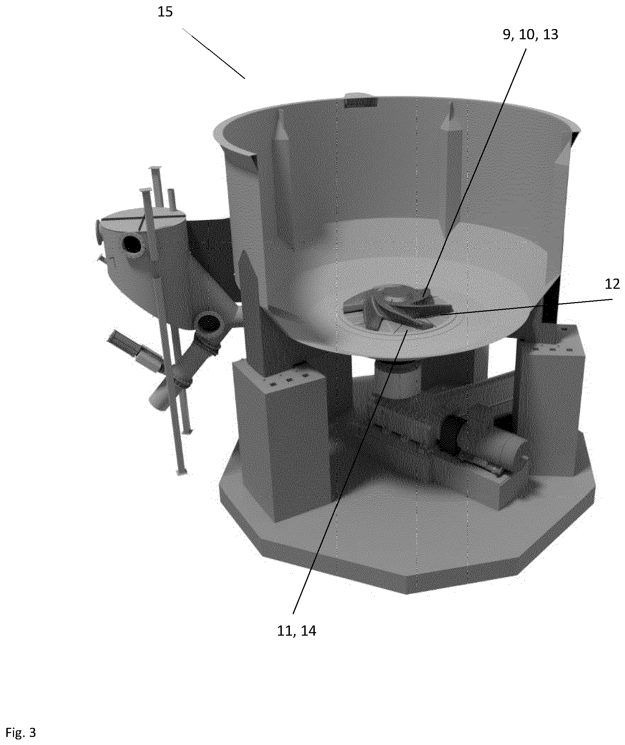

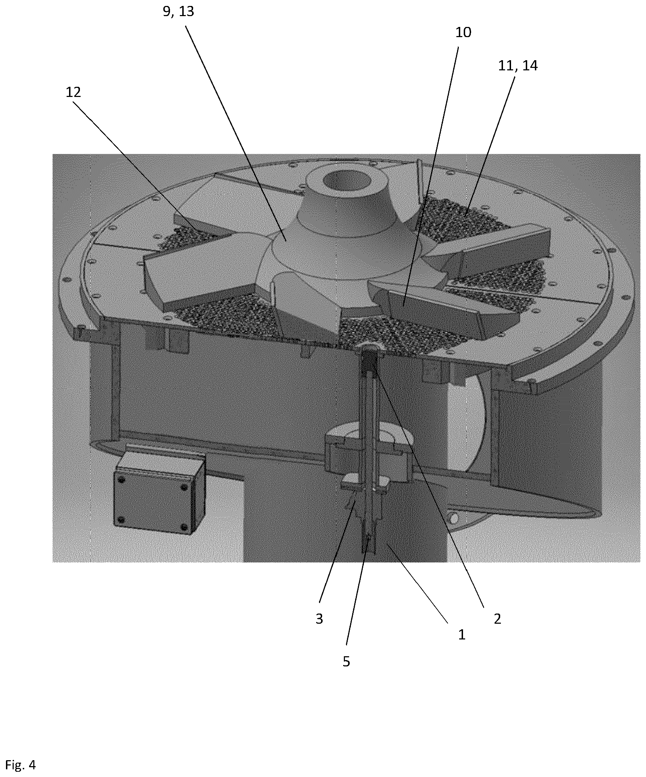

Fig. 3. zeigt eine als Pulper 15 ausgestaltete Vorrichtung zur Aufbereitung einer Faserstoffsuspension mit der erfindungsgemäßen Messanordnung. Dabei ist die erste Komponente 9 als um eine Achse drehbarer Rotor 13 und die zweite Komponente 11 als Siebeinrichtung 14 ausgebildet. Weiter umfasst der Rotor 13 zumindest eine Verschleißkomponente 10, welche beispielsweise als Verschleißleiste auf dem Rotor 13 ausgebildet ist. Dabei ist zwischen Rotor 13 und Siebeinrichtung 14 ein Spalt 12 ausgebildet, wobei die Verschleißkomponente im Spalt 12 angeordnet ist. Hinsichtlich weiterer Details zur Messanordnung wird auf Fig. 4 verwiesen.

Fig. 4 zeigt ein Detail der als Pulper 15 ausgestalteten Vorrichtung zur Aufbereitung einer Faserstoffsuspension mit der erfindungsgemäßen Messanordnung. So ist die erste Komponente 9 als um eine Achse drehbarer Rotor 13 und die zweite Komponente 11 als Siebeinrichtung 14 ausgebildet. Der Rotor 13 umfasst zumindest eine Verschleißkomponente 10, beispielsweise eine Verschleißleiste. Zwischen dem Rotor 13 und der Siebeinrichtung 14 ist ein Spalt 12 ausgebildet, wobei die Verschleißkomponente im Spalt 12 angeordnet ist. Der Sensor 1 ist in der zweiten Komponente 11 angeordnet, wobei der Sensor 1 entweder in der Siebeinrichtung 14 oder benachbart zur Siebeinrichtung 14 angeordnet ist. Rotor 13 und Siebeinrichtung 14 sind relativ zueinander bewegbar, insbesondere rotierbar, wobei im Spalt eine Strömung ausgebildet werden kann. Der Fühler 2 ist vollständig innerhalb des Gehäuses 4 des Sensors 1 positionierbar, was vorteilhaft ist, wenn der Sensor nicht zur Messung verwendet wird und Verschleiß am Sensor vermieden werden soll. Zur Messung wird der Fühler 2 zumindest zum Teil außerhalb des Gehäuses 4 entlang des Messweges 6 bewegt, wobei der Fühler 2 über den Motor 3 in Richtung der ersten Komponente 9 bzw. des Rotors 13 bzw. der Verschleißkomponente in den Spalt 12 bewegt wird. Dabei werden über den Vibrationssensor 5 die Vibrationen des Fühlers 2 entlang des Messweges erfasst. Vorteilhafterweise ist im unmittelbaren Nahbereich der ersten Komponente 9, welche relativ zum Sensor 1 bewegt ist, ein starker Anstieg der Vibrationen im Fühler messbar, und erlaubt so die Erfassung des Abstands der ersten Komponente 9 vom Sensor 1 auch ohne physischen Kontakt zwischen Fühler 2 und erster Komponente 9.

Die vorliegende Erfindung bietet somit zahlreiche Vorteile. Die Vorrichtung zur Aufbereitung einer Faserstoffsuspension umfassend den erfindungsgemäßen Sensor erlaubt eine berührungslose Bestimmung des Abstands zu einer ersten Komponente, wobei unmittelbar eine exakte, inline Messung auch in einer schwierigen - weil in einer trüben, nicht transparenten und/oder abrasiven - Messumgebung zuverlässig erfolgt. Insbesondere erlaubt dies die Anwendung in einer Anordnung, wobei die erste Komponente relativ zum Sensor bewegt ist, bzw. die Anwendung in bewegten Systemen. Vorteilhafterweise kann so der Verschleiß der ersten Komponente erfasst werden. Erfindungsgemäß unterliegt der Sensor nur vernachlässigbarem Verschleiß, wobei der Fühler des Sensors nur während der eigentlichen Messung der Messumgebung ausgesetzt ist und zwischen den Messungen innerhalb des Gehäuses positioniert ist.

### Bezugszeichen

- (1): Sensor
- (2): Fühler
- (3): Motor
- (4): Gehäuse
- (5): Vibrationssensor
- (6): Messweg
- (7): Verbindungselement
- (8): Spindel
- (9): Erste Komponente
- (10): Verschleißkomponente
- (11): Zweite Komponente
- (12): Spalt
- (13): Rotor
- (14): Siebeinrichtung
- (15): Pulper

## Patentansprüche

1. Vorrichtung zur Aufbereitung einer Faserstoffsuspension umfassend eine erste Komponente (9) mit zumindest einer auf der ersten Komponente (9) insbesondere als Verschleißleiste ausgebildeten Verschleißkomponente (10), und eine zweite Komponente (11), wobei zwischen der ersten Komponente (9) und der zweiten Komponente (11) ein Spalt (12) ausgebildet ist, die zumindest eine Verschleißkomponente (10) in dem ausgebildeten Spalt (12) angeordnet ist und die erste Komponente und die zweite Komponente relativ zueinander bewegbar, insbesondere rotierbar, sind, **dadurch gekennzeichnet, dass** ein Sensor (1) in der zweiten Komponente (11) angeordnet ist, der Sensor (1) einen Fühler (2) umfasst, der Fühler (2) entlang eines Messweges (6) in Richtung der ersten Komponente (11) in den Spalt (12) bewegbar ist, wobei der Sensor (1) einen Vibrationssensor (5) umfasst und der Vibrationssensor (5) zur Erfassung der Vibrationen des Fühlers (2) entlang des Messweges (6) ausgebildet ist, und der Fühler (2) entlang des Messweges (6) in Richtung der Verschleißkomponente (10) in den Spalt (12) bewegbar ist, wobei zur berührungslosen Erfassung des Verschleißes der ersten Komponente (9) ein Abstand zwischen dem Sensor (1) und der ersten Komponente (9) erfassbar ist und der Abstand über den Vibrationssensor (5) durch Messung der Vibrationen des Fühlers (2) entlang des Messweges (6) im Spalt (12) erfassbar ist.

2. Vorrichtung nach Anspruch 1, wobei der Messweg (6) als Gerade ausgebildet ist.

3. Vorrichtung nach einem der Ansprüche 1 bis 2, wobei der Sensor (1) einen Motor (3) umfasst, der Fühler (2) über den Motor (3) entlang des Messweges (6) bewegbar ist und der Motor (3) insbesondere als Schrittmotor ausgebildet ist.

4. Vorrichtung nach Anspruch 3, wobei der Fühler (2) und der Vibrationssensor (5) über ein Verbindungselement (7), insbesondere eine Stange, verbunden sind und der Motor (3) an das Verbindungselement (7) in einem Bereich zwischen Fühler (2) und Vibrationssensor (5) gekoppelt ist.

5. Vorrichtung nach Anspruch 4, wobei der Motor (3) über eine Spindel (8) an das Verbindungselement (7) gekoppelt ist.

6. Vorrichtung nach einem der Ansprüche 1 bis 5, wobei der Fühler (2) aus einer Aluminium-Bronze Legierung ausgebildet ist.

7. Vorrichtung nach einem der Ansprüche 1 bis 6, wobei der Sensor (1) ein Gehäuse (4) umfasst und der Fühler (2) über das Gehäuse (4) direkt oder indirekt entlang des Messweges (6) geführt ist.

8. Vorrichtung nach Anspruch 7, wobei der Fühler (2) vollständig innerhalb des Gehäuses (4) positionierbar ist.

9. Vorrichtung nach Anspruch 7 oder 8, wobei der Fühler (2) zumindest zum Teil außerhalb des Gehäuses (4) entlang des Messweges (6) bewegbar ist.

10. Vorrichtung nach einem der Ansprüche 1 bis 9, wobei die Vorrichtung als Pulper, Refiner, Detrasher oder Sortierer ausgebildet ist.

11. Vorrichtung nach einem der Ansprüche 1 bis 10, wobei die erste Komponente (9) als um eine Achse drehbarer Rotor (13) und die zweite Komponente (11) als Siebeinrichtung (14) oder Stator ausgebildet ist.

12. Vorrichtung nach einem der Ansprüche 1 bis 10, wobei die erste Komponente (9) als Siebeinrichtung (14) oder Stator und die zweite Komponente (11) als um eine Achse drehbarer Rotor (13) ausgebildet ist.

13. Vorrichtung nach Anspruch 11, wobei die Vorrichtung als Pulper (15) und die zweite Komponente (11) als Siebeinrichtung (14) ausgebildet ist.

14. Verfahren zur Messung des Abstands zwischen einer ersten Komponente (9) und einer zweiten Komponente (11) in einer Vorrichtung zur Aufbereitung einer Faserstoffsuspension nach einem der Ansprüche 1 bis 13, wobei der Spalt (12) mit einer Flüssigkeit oder Suspension gefüllt ist, und die erste Komponente (9) und die zweite Komponente (11) zur Ausbildung einer Strömung im Spalt relativ zueinander bewegt,insbesondere rotiert, werden, wobei der Fühler (2) in Richtung der ersten Komponente (9) in den Spalt (12) bewegt wird, wobei über den Vibrationssensor (5) die Vibrationen des Fühlers (2) entlang des Messweges (6) im Spalt erfasst werden.

15. Verfahren zur Erfassung des Verschleißes einer ersten Komponente (9) in einer Vorrichtung zur Aufbereitung einer Faserstoffsuspension nach einem der Ansprüche 1 bis 13, wobei zur berührungslosen Erfassung des Verschleißes der ersten Komponente (9) der Abstand zwischen dem Sensor (1) und der ersten Komponente (9) nach Anspruch 14 durchgeführt wird.

## Claims

1. Device for processing a fibre stock suspension comprising a first component (9) with at least one wear component (10) formed on the first component (9), in particular as a wear strip, and a second component (11), wherein a gap (12) is formed between the first component (9) and the second component (11), the at least one wear component (10) is arranged in the gap (12) and the first component and the second component are movable relative to one another, in particular rotatable, **characterized in that** a sensor (1) is arranged in the second component (11), the sensor (1) comprises a sensing element (2), the sensing element (2) is movable along a measuring path (6) in the direction of the first component (11) into the gap (12), wherein the sensor (1) comprises a vibration sensor (5) and the vibration sensor (5) is configured to detect the vibrations of the sensing element (2) along the measuring path (6), and the sensing element (2) is movable along the measuring path (6) in the direction of the wear component (10) into the gap (12), wherein for contactless detection of the wear of the first component (9) a distance between the sensor (1) and the first component (9) can be detected and the distance can be detected via the vibration sensor (5) by measuring the vibrations of the sensing element (2) along the measuring path (6) in the gap (12).

2. Device according to claim 1, wherein the measuring path (6) is embodied as a straight line.

3. Device according to one of claims 1 to 2, wherein the sensor (1) comprises a drive (3), the sensing element (2) can be moved along the measuring path (6) via the drive (3) and the drive (3) is designed in particular as a stepping motor.

4. Device according to claim 3, wherein the sensing element (2) and the vibration sensor (5) are connected via a connecting element (7), in particular a rod, and the drive (3) is coupled to the connecting element (7) in an area between the sensing element (2) and the vibration sensor (5).

5. Device according to claim 4, wherein the drive (3) is coupled to the connecting element (7) via a spindle (8).

6. Device according to one of claims 1 to 5, wherein the sensing element (2) is embodied in an aluminium-bronze alloy.

7. Device according to one of claims 1 to 6, wherein the sensor (1) comprises a housing (4) and the sensing element (2) is guided directly or indirectly along the measuring path (6) via the housing (4).

8. Device according to claim 7, wherein the sensing element (2) can be positioned entirely within the housing (4).

9. Device according to claim 7 or 8, wherein the sensing element (2) is at least partially movable outside the housing (4) along the measuring path (6).

10. Device according to one of claims 1 to 9, wherein the device is configured as a pulper, refiner, detrasher or screen.

11. Device according to one of claims 1 to 10, wherein the first component (9) is designed as a rotor (13) rotatable about an axis and the second component (11) is designed as a screening device (14) or stator.

12. Device according to one of claims 1 to 10, wherein the first component (9) is designed as screening device (14) or stator and the second component (11) is designed as rotor (13) rotatable about an axis.

13. Device according to claim 11, wherein the device is designed as pulper (15) and the second component (11) is designed as screening device (14).

14. Method for measuring the distance between a first component (9) and a second component (11) in a device for processing a fibre stock suspension according to one of claims 1 to 13, wherein the gap (12) is filled with a liquid or suspension, and the first component (9) and the second component (11) are moved relative to one another, in particular rotated, to form a flow in the gap, wherein the sensing element (2) is moved in the direction of the first component (9) into the gap (12), wherein the vibrations of the sensing element (2) along the measuring path (6) are detected in the gap via the vibration sensor (5).

15. Method for detecting the wear of a first component (9) in a device for processing a fibre stock suspension according to one of claims 1 to 13, wherein the distance between the sensor (1) and the first component (9) is measured according to claim 14 for contactless detection of the wear of the first component (9).

## Revendications

1. Dispositif pour préparer une suspension mère de fibres comprenant un premier composant (9) avec au moins un composant d'usure (10) formé sur le premier composant (9), en particulier sous la forme d'une bande d'usure, et un second composant (11), dans lequel un interstice (12) est ménagé entre le premier composant (9) et le second composant (11), l'au moins un composant d'usure (10) est disposé dans l'interstice (12) et le premier composant et le second composant peuvent se déplacer, en particulier tourner, l'un par rapport à l'autre, **caractérisé en ce qu'**un capteur (1) est disposé sur le second composant (11), le capteur (1) comprend un organe de détection (2), l'organe de détection (2) peut se déplacer le long d'un trajet de mesure (6) dans la direction du premier composant (11) dans l'interstice (12), dans lequel le capteur (1) comprend un capteur de vibrations (5) et le capteur de vibrations (5) est conçu pour détecter les vibrations de l'organe de détection (2) le long du trajet de mesure (6), et l'organe de détection (2) peut se déplacer le long du trajet de mesure (6) dans la direction du composant d'usure (10) dans l'interstice (12), dans lequel pour la détection sans contact de l'usure du premier composant (9) une distance entre le capteur (1) et le premier composant (9) peut être détectée et la distance peut être détectée par l'intermédiaire du capteur de vibrations (5) qui mesure les vibrations de l'organe de détection (2) le long du trajet de mesure (6) dans l'interstice (12).

2. Dispositif selon la revendication 1, dans lequel le trajet de mesure (6) se présente sous la forme d'une ligne droite.

3. Dispositif selon l'une quelconque des revendications 1 à 2, dans lequel le capteur (1) comprend un moteur (3), l'organe de détection (2) peut se déplacer le long du trajet de mesure (6) par le biais du moteur (3) et le moteur (3) peut être conçu notamment sous la forme d'un moteur pas à pas.

4. Dispositif selon la revendication 3, dans lequel l'organe de détection (2) et le capteur de vibrations (5) sont reliés par l'intermédiaire d'un élément de liaison (7), en particulier une tige, et le moteur (3) est couplé à l'élément de liaison (7) dans une zone située entre l'organe de détection (2) et le capteur de vibrations (5).

5. Dispositif selon la revendication 4, dans lequel le moteur (3) est couplé à l'élément de liaison (7) par l'intermédiaire d'un axe (8).

6. Dispositif selon l'une quelconque des revendications 1 à 5, dans lequel l'organe de détection (2) est constitué d'un alliage d'aluminium et de bronze.

7. Dispositif selon l'une quelconque des revendications 1 à 6, dans lequel le capteur (1) comprend un boîtier (4) et l'organe de détection (2) est guidé directement ou indirectement le long du trajet de détection (6) par l'intermédiaire du boîtier (4).

8. Dispositif selon la revendication 7, dans lequel l'organe de détection (2) peut être entièrement positionné à l'intérieur du boîtier (4).

9. Dispositif selon la revendication 7 ou 8, dans lequel au moins une partie de l'organe de détection (2) peut être déplacé à l'extérieur du boîtier (4) le long du trajet de mesure (6).

10. Dispositif selon l'une quelconque des revendications 1 à 9, dans lequel le dispositif est réalisé sous la forme d'un triturateur, d'un raffineur, d'un dispositif d'élimination d'impuretés ou d'un tamis.

11. Dispositif selon l'une quelconque des revendications 1 à 10, dans lequel le premier composant (9) est réalisé sous la forme d'un rotor (13) qui peut tourner autour d'un axe et le second composant (11) est réalisé sous la forme d'un dispositif de tamisage (14) ou d'un stator.

12. Dispositif selon l'une quelconque des revendications 1 à 10, dans lequel le premier composant (9) est conçu sous la forme d'un dispositif de tamisage (14) ou d'un stator et le second composant (11) est conçu sous la forme d'un rotor (13) qui peut tourner autour d'un axe.

13. Dispositif selon la revendication 11, dans lequel le dispositif est conçu sous la forme d'un triturateur (15) et le second composant (11) est conçu sous la forme d'un dispositif de tamisage (14).

14. Procédé de mesure de la distance entre un premier composant (9) et un second composant (11) dans un dispositif de préparation d'une suspension mère de fibres selon l'une quelconque des revendications 1 à 13, dans lequel l'interstice (12) est rempli d'un liquide ou d'une suspension, et le premier composant (9) et le second composant (11) se déplacent, en particulier tournent, l'un par rapport à l'autre pour former un écoulement dans l'interstice, dans lequel l'organe de détection (2) se déplace dans la direction du premier composant (9) dans l'interstice (12), dans lequel les vibrations de l'organe de détection (2) le long du trajet de mesure (6) sont détectées dans l'interstice par l'intermédiaire du capteur de vibrations (5).

15. Procédé de détection de l'usure d'un premier composant (9) dans un dispositif de préparation d'une suspension mère de fibres selon l'une quelconque des revendications 1 à 13, dans lequel la distance entre le capteur (1) et le premier composant (9) est mesurée selon la revendication 14 permettant ainsi la détection sans contact de l'usure du premier composant (9).
